# EUROPEAN PATENT SPECIFICATION

(11) **EP 3 822 177 B1**
(45) Date of publication and mention of the grant of the patent: **02.09.2026**
(21) Application number: 20207215.3
(22) Date of filing: 12.11.2020
(51) Int. Cl.: B64G 1/58, B64G 1/62

(54) **REUSABLE PART OF A SPACECRAFT AND REUSABLE KIT**
WIEDERVERWENDBARER TEIL EINES RAUMFAHRZEUGS UND WIEDERVERWENDBARES KIT
PARTIE RÉUTILISABLE D'UN ENGIN SPATIAL ET KIT RÉUTILISABLE

(30) Priority: 13.11.2019 DE 102019130591
(43) Date of publication of application: 19.05.2021
(73) Proprietor: ArianeGroup GmbH, 82024 Taufkirchen (DE)
(72) Inventor: Arturs, Jasjukevics, 28199 Bremen (DE)
(74) Representative: Marschall, Stefan

(56) References cited:
- CN-A- 109 455 318
- CN-A- 110 116 823
- CN-B- 104 986 358
- JP-A- H04 163 300
- US-A- 3 250 499
- US-A- 3 286 951
- US-A- 4 832 288
- US-A1- 2016 264 266

## Description

The present invention concerns to a spacecraft part such as an upper stage of a spacecraft, and said spacecraft part wherein reusable heat shields, at least one decelerator means and a support structure are parts of a kit.

In the past, upper stages of spacecraft burnt up on re-entry into the atmosphere. In the meantime, the need arises for reusing upper stages such as the spacecraft Space Shuttle several years ago. However, the Space Shuttle re-entered into the atmosphere in a non-ballistic way using aerodynamic lifting properties of the vehicle shape for a re-entry at non-zero angle of attack (angle between the vehicle's longitudinal axis and the relative flow direction of the atmosphere). In order to enable a ballistic re-entry without using aerodynamic lift of the vehicle at an angle of attack of zero or almost zero, the re-entry temperatures are much higher so that the heat shields have to withstand higher temperatures. Well known are ablative materials for spacecraft heat shields, however, such heat shields are not reusable as the material is being removed during the re-entry. Document CN110116823A discloses a spacecraft with reusable non-ablative heat shields, but said heat shields are adjacently connected to a decelerator device, making the whole system less convenient for fast and easy reconfiguration.

It is an object to the invention to provide a spacecraft part such that the upper stage can withstand the high temperatures at the re-entry into the atmosphere, to provide a spacecraft part with a kit for enabling a spacecraft part such an upper stage to re-entry.

The object is solved by a spacecraft part according to the features of claim 1. Particular embodiments are disclosed in the dependent claims, in the description and in the figures.

According to the invention, a spacecraft part, for instance an upper stage, is configured to re-entry into the atmosphere and to be reused for several missions. The spacecraft part is equipped with reusable heat shields and at least one decelerator means. The heat shields are of the non-ablative type and are A preferably made from Ceramic Matrix Composites (CMC), more preferably from Ultra High Temperature Ceramic Matrix Composites (UHTCM). The proposed solution allows the return of an upper (or other orbiting) rocket stage back to Earth safely and with a possibility of reuse. As an example, Ariane 6 Upper Liquid Propulsion Module can to be equipped with the reusable kit according to the invention. However, the invention could be applied on any other currently existing or in-development upper stage, either with reusable kit or as a part of baseline design. The possibility to extend the heat shields diameter past the diameter of the spacecraft part such as an upper stage cylinder shadows the rest of the vehicle from the high-enthalpy flow and allows to go without dedicated thermal protection anywhere except on the nose heat shields. Additionally, the CMCs, in particular UHTCMCs are an adequate material for control surfaces such as flaps and fins, which a priori experience greater heat fluxes than the rest of the vehicle. Here, higher thermal and geometrical stability during re-entry also provides more design freedom, than common ceramic matrix composites or ablative materials.

In other words, the invention consists of spacecraft part such as an upper stage to be equipped with the reusable kit according to the invention. The reusable kit allows taking for instance, a current Ariane 6, upper stage, and by adding extra hardware with minimum modifications to existing design, safely return such upper stage back to Earth with the final goal to reuse it. Further on, not only the upper stage can be re-used, but at least the heat shields of the kit themselves.

An inventive reusable Kit is to be installed on a spacecraft part provided to re-enter into the atmosphere, for instance an upper stage of a spacecraft, comprises non-ablative heat shields to be configured to withstands temperatures over 2000°C, in particular over 2500°C. Such temperatures normally arise in the phase of re-entry into the atmosphere. An exemplary material for the non-ablative heat shields are CMC, more preferably UHTCMC. Such material withstands the required temperatures and due to its non-ablative character, the kit can be reused for several missions without a replacement of the heat shields, respectively without any general replacement of the heat shields.

In order to fit the heat shields and their support structure, the kit has a support structure carrying the heat shields and holding them in place at the spacecraft part.

In case a need for significant reduction of ballistic coefficient is identified, for instance for the deceleration from high supersonic to subsonic and controlled parafoil flight up to mid-air recovery, the kit comprises at least one decelerator means.

The decelerator means is an inflatable aerodynamic decelerator or a deployable aerodynamic decelerator, for instance. The decelerator means is deployed already in vacuum before the re-entry interface. It helps decelerate the stage from high supersonic to low supersonic speeds.

In the case that the center of pressure is required to be shifted more aft, the kit can additionally or separately comprise adequate steering means and or control means such as fins and/or flaps. Also, the decelerator can contribute to shifting the centre of pressure aft. In order to withstand the high temperature, it is preferred if an outer surface of the steering means and or control means are made from CMC or UHTCMC.

In order to protect the decelerator means in its undeployed state against heat, for instance, if undeployed the decelerator means can surround the support structure carrying the heat shields and thereby being covered by the heat shields. In this state, the decelerator is an up rolled as a cylindrical roll, whereas if the decelerator is unrolled it forms a kind of umbrella surrounding the upper stage at least partially, for instance its cylindrical inter tank structure and/or its propulsion engine.

Preferably, the decelerator means is of such material and design that it protects the upper stage at least partially against heat in its deployed state. By means of this, the decelerator continues the heat shields.

According to an aspect not being part of the claimed subject-matter, a method of re-entry of a spacecraft part such as an upper stage of a spacecraft, comprises the step of re-entry into the atmosphere in an angle of attack α = 0 (zero) or almost zero. According to the invention, there is no need for additional hardware required for touchdown and terminal velocity reduction to zero (0), as it is performed by the helicopter, for instance. This reduces system complexity and costs.

An exemplary flight sequence is as followed:
1. Normal operation of the Launcher system, including the deployment of the payload(s)
2. Separation of the upper part of the upper stage such as a launch vehicle adapter and exposure of the heat shields
3. Retro boost to begin the re-entry
4. Change of orientation to nose-first
5. Deployment of the decelerator
6. Re-entry and free fall
7. Optional: deployment of an inflatable aerodynamic decelerator and/or deployable aerodynamic decelerator and/or ballute
8. Flight through high-enthalpy phase
9. Deployment of parachutes sequence after reaching speeds below hypersonic (M<5)
10. Deployment of parafoil at subsonic
11. Capture with the helicopter
12. Return to manufacturing / integration site for refurbishment and eventual re-flight

A preferred spacecraft part such an upper stage in order to realise this flight scenario is equipped with heat shields that have a thermal stability more than 2000°C, even more than 2500°C. An exemplary material is "conventional" CMC or UHTCMC which has a high thermal stability (>2500°C). The use of such material also allows the reusability of the heat shields. Such material is configured to manage the high enthalpy flow conditions and associated mechanical loads arising at the event of re-entry. In addition, it can be preferred if UHTCMC is used as an outer surface material for the spacecraft part. Besides heat shields, also steering and/or control surfaces can be made from UHTCMC.

The use of UHTCMC enables the concept of a ballistically re-entering heavy vehicle, for instance at re-entry for instance but not limited to BC>10kg/m², from orbital velocity. The use of such material also allows the reusability of the heat shields. Additionally, extremely high thermal stability (>2500°C) giving more design freedom for the heat shield design. The material may support a preferred the ballistic re-entry into the atmosphere and does not require any essential new architecture of the upper stage.

Exemplary concepts, which are centered around the UHTCMC frontal heat shields are:
- Inflatable aerodynamic decelerator / deployable aerodynamic decelerator on the front side behind the UHTCMC heat shields
   o Allows to further shadow the aft side of the vehicle
   o Such aerodynamic decelerator / deployable aerodynamic decelerator would have an incidence angle to the flow smaller than that of the heat shields in order to be able to manage the high heat flux, while still providing shadowing
   o It would also improve the static stability of the vehicle
   o It would reduce the ballistic coefficient of the re-entry vehicle overall
- Aerodynamic decelerator / deployable aerodynamic decelerator ballute on the aft side
   o It would also improve the static stability of the vehicle
   o It would reduce the ballistic coefficient of the re-entry vehicle overall
- Fins / flaps as control surfaces or fixed
   o To improve the static stability of the vehicle
   o To allow controllability in hypersonic and supersonic flight
- Parachutes
   o To reduce the speed of the vehicle from supersonic to subsonic
- Parafoil
   o To allow the vehicle to maneuver prior to mid-air capture by a helicopter

The reusable kit consists preferably of the following components:
- Ultra-High Temperature Ceramic Matrix Composite frontal heat shields (and its support structure), which may have a diameter such that it extends past the diameter of the upper stage to shadow the vehicle behind the heat shields
- Additional skirt under the Launch Vehicle Adaptor to allow accommodating the heat shields
- Parachutes & Parafoil systems and their fixations on the aft side

Additionally, following optional hardware is foreseen in the kit:
- Fins / flaps on the aft side
- Inflatable aerodynamic decelerator (IAD) and/or deployable aerodynamic decelerator either on the front side directly behind the rigid front heat shields, or on the aft side

Again, main features of the invention are:
- Reusable kit for an upper stage of a spacecraft, for instance the upper liquid propulsion module of Ariane 6
- Re-use enables injection of micro satellites constellation in to Low Earth Orbit, as exemplary mission
- Ballistic, un-guided re-entry (α~0⁰ angle of attack, no active control)
- Mid-air retrieval (no landing legs, landing engines: empty upper stage is light enough)
- Recovery back to manufacturing / integration site for refurbishment and reuse

A preferred kit includes:
- Additional skirt under the launch vehicle adapter
- heat shields made from CMC or UHTCMC and support structure
- Parachutes and parafoil systems and their fixations at the aft side.

Optionally the kit can conclude:
- Fins / flaps, and/or
- Inflatable aerodynamic decelerator or deployable aerodynamic decelerator

It is noted that the reusable kit can be adapted to other spacecraft parts in order to enable their re-entry. The use of the kit is not limited to an upper stage.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and are not defined again for each figure. Shown is schematically in
- Fig. 1: an upper stage, for instance an upper liquid propulsion module of Ariane 6 carrying a launch vehicle adapter,
- Fig. 2: a first embodiment according to an aspect not being part of the claimed subject-matter, of a reusable upper stage equipped with a reusable kit showing an undeployed and/or uninflated decelerator at the aft side,
- Fig. 3: the first embodiment of an upper stage showing heat shields of the kit after separation of the launch vehicle adapter and the deployed and/or inflated decelerator, according to an aspect not being part of the claimed subject-matter.
- Fig. 4: a second embodiment of an upper stage equipped with a reusable kit showing its deployed and/or inflated decelerator at the front side,
- Fig. 5: a third embodiment of an upper stage equipped with a reusable kit showing a deployed and/or inflated decelerator at the front side,
- Fig. 6: a fourth embodiment of an upper stage equipped with a reusable kit having an extending heat shields panel at the front side,
- Fig. 7: a cross-sectional view of a preferred upper stage at its front side,
- Fig. 8: a preferred mission profile,
- Fig. 9: a preferred re-entry of the upper stage in free fall, and
- Fig. 10: an illustration of the angle of attack.

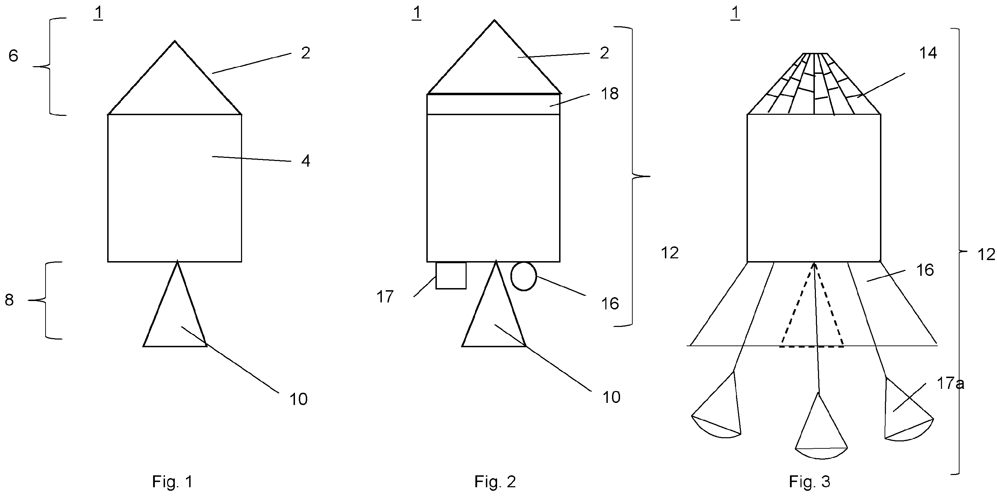

In figure 1, a common spacecraft part such as an upper stage 1, in particular an upper liquid propulsion module of Ariane 6, carrying a launch vehicle adapter 2 is shown.

The upper stage 1 has cylindrical part, in particular a cylindrical inter tank structure 4, a conical front side 6 and an aft side 8. At its front side 6, the launch vehicle adapter 2 is positioned having the same conical shape as the front side 6. In particular, in the embodiment as illustrated in figure 1, 2 and 3, the front side 6 has a maximum outer diameter that is similar or equal, respectively, as the outer diameter of the cylindrical inter tank structure 4 such that the front side 6 does not projects over the cylindrical inter tank structure laterally. At the aft side 8, a central propulsion engine 10 is arranged which is used as driving means.

As shown in figures 2 and 3, according to an aspect not being part of the claimed subject-matter, the upper stage 1 can be equipped with a reusable kit 12 enabling the upper stage to re-entry into the atmosphere and to be reused for several missions. In figure 2, the upper stage 1 is shown in a mission phase before separation of the launch vehicle adapter 2, whereas in figure 3 the upper stage 1 is shown in a mission phase after the separation of the launch vehicle adapter 2, ready for re-entry into the atmosphere. The kit 12 comprises heat shields 14 and, as shown in this embodiment, at least one decelerator 16 and optionally a parachute and/or parafoil system 17.

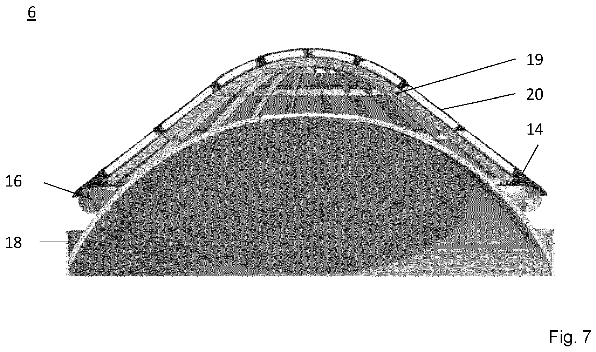

The heat shields 14 protect the upper stage 1 against the high temperature which arise during the re-entry. The heat shields 14 are positioned under the launch vehicle adapter 2 which is held in place by a skirt 18 surrounding the cylindrical part 4 adjacent to the front side 6 of the upper stage 4. When the launch vehicle adapter 2 is separated, its skirt 18 is detached and the heat shields 14 are exposed. In addition, the deployment of the decelerator 16 is allowed. As will be explained in more detailed with reference to figure 7, the heat shields 14 are supported by a support structure 19 which is attached to the upper stage cylinder 4 under the skirt 18.

A preferred material for the heat shields 14 is Ceramic Matrix Composites (CMC), for instance High Temperature Ceramic Matrix Composites (HTCMC). In order to enable the reusability of the kit 12, the heat shields 14 are non-ablative. In the phase before re-entering into the atmosphere, the heat shields 14 are positioned on their support structure 19 (s. figure 7) between an outer surface of the front side 6 and the launch vehicle adapter 2. In this position, they are covered by the launch vehicle adapter 2 totally. The heat shields 14 form a kind of a conical panel extending nearly over the whole outer surface of the front side 6. In this embodiment, the diameter of the heat shield panel is a bit smaller than the diameter of the cylindrical part 4 in order to allow an integration of the cylindrical part 4 that shifts the launch vehicle adapter 2 higher. The coverage of the outer diameter of the upper stage 1 and its sides is achieved with the decelerator 16. If the vehicle launch adapter 2 is separated, the heat shields 14, respectively the heat shields panel, cover the front side 6 on its outer surface.

The at least one decelerator 16 or the decelerator system, respectively, is in its undeployed state in such a position at the aft side 8 that it protected against the high temperatures during the re-entry phase. The decelerator 16 is an inflatable aerodynamic decelerator and/or deployable aerodynamic decelerator.

The basic function of the decelerator 16 is to reduce the ballistic coefficient if necessary or and/or to decelerate the upper stage 1 from high supersonic to subsonic. It would be deployed prior to reaching the re-entry interface so it would go through the high-enthalpy flow phases.

In the embodiment shown in figure 2, the decelerator 16 is position at the aft side 8 within the outer diameter of the cylindrical inter tank structure 4. The decelerator means 16 is preferably deployed already in vacuum before the re-entry interface, helping to decelerate the stage from high supersonic to low supersonic speeds.

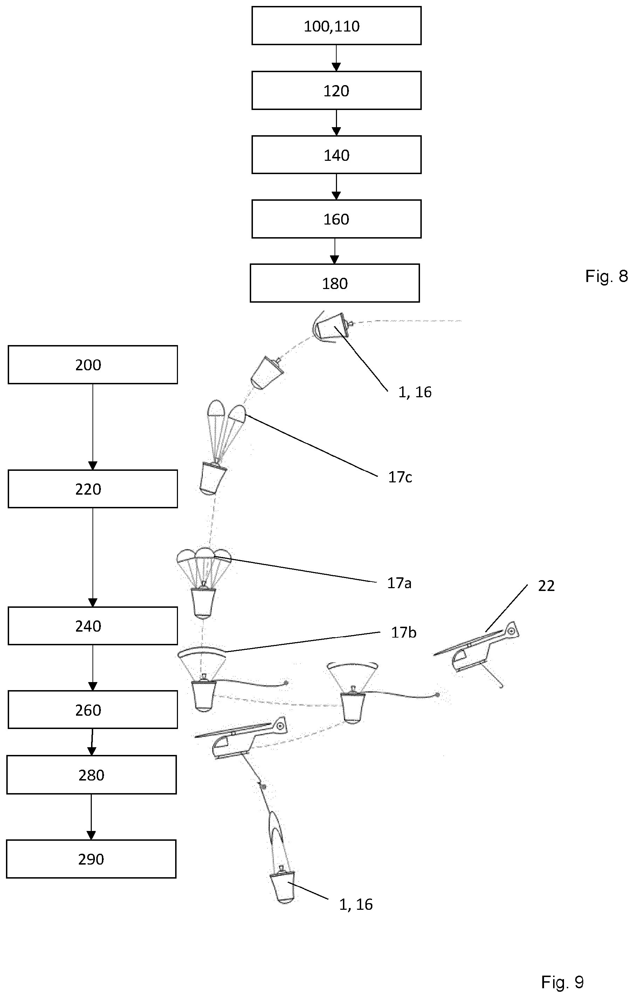

The parachute and/or parafoil system 17 is also positioned at the aft side 8 of the upper stage 1. Exemplary, three parachutes 17a of the parachute and/or parafoil system 17 are shown. It can finally be deployed to slow the upper stage 1 down further. Further details of the parachute and/or parafoil system 17 are illustrated in figure 9. As can be seen in figure 9, a combination of both parachutes 17a and parafoils 17b is possible. Even ballutes 17c can be incorporated in the parachute and/or parafoil system 17.

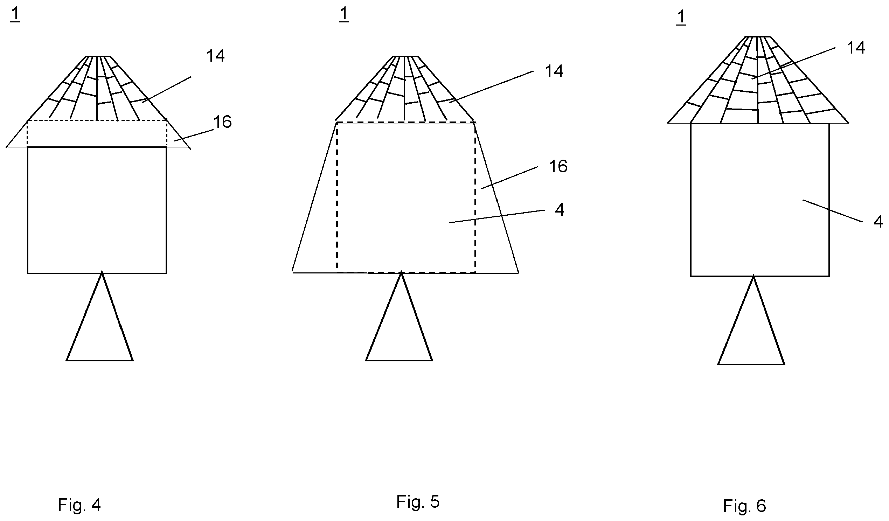

In figures 4 and 5, further embodiments of a spacecraft part such as an upper stage 1 is shown. The main difference between the embodiments according to figures 2 and 3 and the embodiment of figures 4 and 5 is that in figures 4 and 5 the at least one decelerator 16 is positioned at the front side 6 of the upper stage 1. In figure 4, the at least one decelerator 16 is configured to extend the conical shape of the front side 6 in its deployed state thereby surrounding the cylindrical inter tank structure 4 at least partially behind the front side 6. In figure 5, the deployed decelerator 16 extends at least over the entire axial length of the cylindrical inter tank structure 4 reaching to the aft side 8 or even beyond. In both embodiments according to figure 4 and 5, its undeployed and/or uninflated state, the at least one decelerator 16 is in such position that it protected against the high temperatures during the re-entry phase.

In figure 6, a further embodiment of a spacecraft part such as an upper stage 1 is shown. Contrary to embodiments shown before, a conical shaped front side 6 extends laterally over the cylindrical inter tank structure 4 of the upper stage 1. The upper stage 1 is also equipped with a reusable kit 12 according to the invention. For the sake of clarity, the reusable kit 12 is not illustrated. A not shown decelerator means 16, such as an inflatable aerodynamic decelerator and/or deployable aerodynamic decelerator, can be positioned at the front side 6 and/or at the aft side 8 as explained in the figures before.

In order to effectively shadow the cylindrical, inter tank structure 4 within an oscillation range when the decelerator 16 is positioned at the aft side 8, the diameter of a heat shields panel is increased in correspondence to the conical shaped front side 6. As the front side 6 extends laterally over the cylindrical inter tank structure 4, shadowing is provided against high-enthalpy flow.

Figure 7 illustrates how the heat shields 14 are supported on the front side 6 and where the decelerator means 16 is positioned in its undeployed state.

The heat shields 14 are arranged to form a heat shield panel 19 covering the outer surface of the front side 6. They are carried by a support structure 19, corresponding to the conical shape of the front side 6. In addition, isolation elements 20 can be positioned under the heat shield panel, in particular between the heat shields 14 and the support structure 19. In order to create space for the undeployed decelerator 16, the heat shields 14 extends laterally over the support structure 19.

In its undeployed state, the decelerator means 16 surrounds the support structure 19 and is positioned in the space between the heat shields 14 and the outer surface of the front end 6. The decelerator 16 is rolled up and when it is deployed it is getting unrolled continuing the conical shape of the heat shield panels (s. figure 4 and 6).

For the sake of completeness, the detachable skirt 18 holding the launch vehicle adapter 2 is illustrated.

In figures 8 and 9, an ascent, flight, re-entry and recovery profile are described. On a mission profile level, following sequence can be foreseen:

### Figure 8:

1. Normal operation 100 of the Launcher system, including the deployment 110 of the payload(s)
2. Separation 120 of the upper part of the upper stage 1 such as the launch vehicle adapter 2 and exposure of the heat shields 12
3. Retro boost 140 to begin the re-entry
4. Change of orientation to nose-first (front side 6) 160
5. Deployment 180 of the decelerator 16

### Figure 9:

6. Re-entry and free fall 200
7. Optional: deployment of ballute 220
8. Flight through high-enthalpy phase
9. Deployment of parachutes system 240 after reaching speeds below hypersonic (M<5)
10. Deployment of parafoil at subsonic 260
11. Capture 280 with the helicopter 22
12. Return 290 to site for refurbishment and re-flight

In other words, after launch from a ground station such as Kourou and the separation of the reusable upper stage 1 and deployment of satellites, the upper stage 1 performs a deorbitation burn and reorients itself to align the heat shields 14 in the direction of the velocity vector. An inflatable aerodynamic decelerator 16 is then deployed at the preferred altitude of around 120 km prior to the point when aerodynamic forces dominate the capabilities of a reaction control system of the upper stage 1. Then the hypersonic, high enthalpy flow portion of the flight takes place, followed by deployment of a series of parachutes 16a. Eventually a parafoil 16b is deployed, and the upper stage begins its controlled flight towards the rendezvous point with the recovery aircraft, which then brings it back to the ground station.

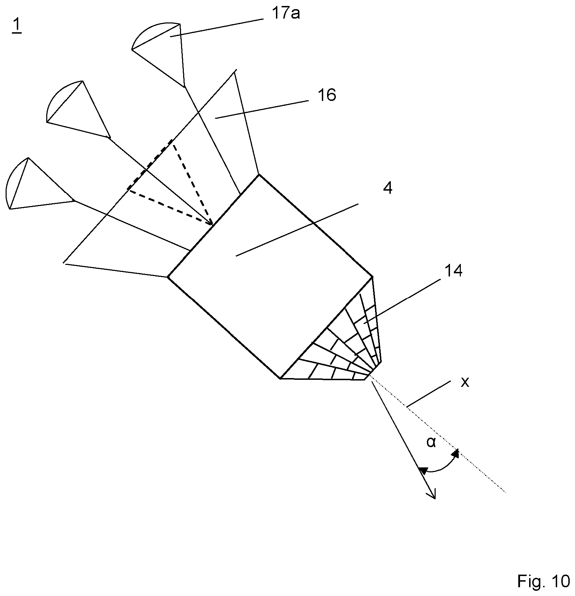

In figure 10, an attack angle α of zero is illustrated resulting in a ballistic entry. The angle of attack α is defined between the longitudinal axis of the upper stage 1 and relative flow direction of the atmosphere. In addition, the deployed decelerator means 16 and deployed parachutes 17a are shown in both states, undeployed and/or uninflated and deployed and/or inflated (dotted lines).

Disclosed is a part 1 of a spacecraft, for instance an upper stage, configured to re-entry into the atmosphere and to be reused for several missions, wherein the part 1 is equipped with a reusable kit comprising non-ablative heat shields 14, at least one decelerator means 16, and/or at least one parachute and/or parafoil system 17, a reusable kit 12 and a method to re-entry into the atmosphere.

### Reference list

- 1: spacecraft part, here: upper stage
- 2: launch vehicle adapter, here: upper part
- 4: cylindrical part, here: inter tank structure
- 6: front side
- 8: aft side
- 10: engine
- 12: kit
- 14: heat shield
- 16: decelerator means, in particular inflatable aerodynamic decelerator and/or deployable aerodynamic decelerator
- 17: parachute and/or parafoil system
- 17a: parachute
- 17b: parafoil
- 17c: ballute
- 18: skirt
- 19: support structure
- 20: isolation elements
- 22: helicopter
- 100: normal operation of a launcher system
- 110: deployment of the payload
- 120: separation of upper part
- 140: retro-boost
- 160: change of orientation
- 180: deployment of decelerator
- 200: re-entry
- 120: deployment of ballute
- 240: deployment of parachute system
- 260: deployment of parafoil system
- 280: capture
- 290: return to side
- X: longitudinal axis of the upper stage
- α: angle of attack

## Claims

1. Part (1) of a spacecraft, for instance an upper stage, configured to re-entry into the atmosphere and to be reused for several missions, wherein the part (1) has a cylindrical inter tank structure (4) and is equipped with reusable heat shields (14) and at least one decelerator means (16),
wherein the reusable heat shields (14) are of a non-ablative type and are positioned at a front side (6) of the part (1),
wherein the reusable heat shields (14) are arranged to form a heat shield panel carried by a support structure corresponding to a conical shape of the front side (6),and wherein the at least one decelerator means (16) is an inflatable aerodynamic decelerator and/or a deployable aerodynamic decelerator (16), and positioned, in its undeployed state,
- on the front side (6) behind the heat shields (14), wherein the decelerator means (16) surrounds the support structure (19) and is positioned in a space between the heat shield panel and an outer surface of the front side (6).

2. Part according to claim 1, wherein the reusable heat shields are made from Ceramic Matrix Composites (CMC), in particular Ultra High Temperature Ceramic Matrix Composites (UHTCMC).

3. Part according to claims 1 or 2, wherein the reusable heat shields (14) and the at least one decelerator means are parts of a kit (12) to be installed on a spacecraft part (1) provided to re-enter into the atmosphere, wherein the kit (12) further comprises the support structure (19) for holding the heat shields (14) in place at the spacecraft part (1).

4. Part according to claim 3, wherein the kit (12) further comprises steering means and/or control surfaces.

5. Part according to one of the preceding claims, wherein in its deployed state the decelerator means (16) protects the spacecraft part (1) at least partially against heat.

## Patentansprüche

1. Teil (1) eines Raumfahrzeugs, zum Beispiel einer Oberstufe, das konfiguriert ist, wieder in die Atmosphäre einzutreten und für mehrere Missionen wiederverwendet zu werden,
wobei das Teil (1) eine zylindrische Intertankstruktur (4) aufweist und mit wiederverwendbaren Hitzeschilden (14) und mindestens einem Bremsmittel (16) ausgerüstet ist,
wobei die wiederverwendbaren Hitzeschilde (14) von nicht-ablativer Art sind und auf einer Vorderseite (6) des Teils (1) angeordnet sind,
wobei die wiederverwendbaren Hitzeschilde (14) so angeordnet sind, dass sie ein Hitzeschildpanel bilden, das durch eine Tragstruktur getragen wird, die einer konischen Gestalt der Vorderseite (6) entspricht, und wobei das mindestens eine Bremsmittel (16) ein aufblasbares aerodynamisches Bremsmittel und/oder ein aufstellbares aerodynamisches Bremsmittel (16) ist und in seinem nicht eingesetzten Zustand
- auf der Vorderseite (6) hinter den Hitzeschilden (14) angeordnet ist, wobei das Bremsmittel (16) die Tragstruktur (19) umgibt und in einem Raum zwischen dem Hitzeschildpanel und einer Außenfläche der Vorderseite (6) angeordnet ist.

2. Teil nach Anspruch 1, wobei die wiederverwendbaren Hitzeschilde aus keramischem Faserverbundwerkstoff (Ceramic Matrix Composites, CMC), insbesondere keramischem Ultrahochtemperatur-Faserverbundwerkstoff (Ultra High Temperature Ceramic Matrix Composites, UHTCMC) gefertigt sind.

3. Teil nach Anspruch 1 oder 2, wobei die wiederverwendbaren Hitzeschilde (14) und das mindestens eine Bremsmittel Teile einer Baugruppe (12) sind, die auf einem Raumfahrzeugteil (1) zu installieren ist, das zum Wiedereintreten in die Atmosphäre vorgesehen ist, wobei die Baugruppe (12) ferner die Tragstruktur (19) zum Halten der Hitzeschilde (14) an Ort und Stelle am Raumfahrzeugteil (1) umfasst.

4. Teil nach Anspruch 3, wobei die Baugruppe (12) ferner Lenkmittel und/oder Steuerflächen umfasst.

5. Teil nach einem der vorangehenden Ansprüche, wobei das Bremsmittel (16) in seinem eingesetzten Zustand das Raumfahrzeugteil (1) mindestens teilweise gegen Hitze schützt.

## Revendications

1. Partie (1) d'un engin spatial, par un exemple un étage supérieur, configurée pour la ré-entrée dans l'atmosphère et pour être réutilisé pour plusieurs missions,
dans laquelle la partie (1) présente une structure inter-réservoirs cylindrique (4) et est équipée de boucliers thermiques réutilisables (14) et d'au moins un moyen de décélérateur (16),
dans laquelle les boucliers thermiques réutilisables (14) sont de type non-ablatif et sont positionnés sur une face avant (6) de la partie (1),
dans laquelle les boucliers thermiques réutilisables (14) sont agencés pour former un panneau de boucliers thermiques supporté par une structure de support correspondant à une forme conique de la face avant (6), et dans laquelle l'au moins un moyen de décélérateur (16) est un décélérateur aérodynamique gonflable et/ou un décélérateur aérodynamique déployable (16), et positionné, dans son état non déployé,
- sur la face avant (6) derrière les boucliers thermiques (14), dans laquelle le moyen de décélérateur (16) entoure la structure de support (19) et est positionné dans un espace entre le panneau de boucliers thermiques et une surface extérieure de la face avant (6).

2. Partie selon la revendication 1, dans laquelle les boucliers thermiques réutilisables sont fabriqués en Composites à Matrice Céramique (CMC), en particulier en Composites à Matrice Céramique Ultra Haute Température (UHTCMC).

3. Partie selon la revendication 1 ou 2, dans laquelle les boucliers thermiques réutilisables (14) et l'au moins un moyen de décélérateur sont des parties d'un kit (12) destiné à être installé sur une partie d'engin spatial (1) prévue pour la ré-entrée dans l'atmosphère, dans laquelle le kit (12) comprend en outre la structure de support (19) pour maintenir les boucliers thermiques (14) en place sur la partie d'engin spatial (1).

4. Partie selon la revendication 3, dans laquelle le kit (12) comprend en outre un moyen de direction et/ou des surfaces de commande.

5. Partie selon l'une des revendications précédentes, dans laquelle dans son état déployé, le moyen de décélérateur (16) protège la partie d'engin spatial (1) au moins partiellement contre la chaleur.
